# EUROPÄISCHE PATENTSCHRIFT

(11) **EP 2 689 176 B1**
(45) Veröffentlichungstag und Bekanntmachung des Hinweises auf die Patenterteilung: **02.11.2016**
(21) Anmeldenummer: 12710211.9
(22) Anmeldetag: 16.03.2012
(51) Int. Cl.: F16L 37/14

(54) **SPERRELEMENT FÜR ANSCHLUSSVORRICHTUNG**
LOCKING ELEMENT FOR CONNECTING DEVICE
ÉLÉMENT DE BLOCAGE POUR DISPOSITIF DE RACCORDEMENT

(30) Priorität: 25.03.2011 DE 102011006097
(43) Veröffentlichungstag der Anmeldung: 29.01.2014
(73) Patentinhaber: Mahle International GmbH, 70376 Stuttgart (DE)
(72) Erfinder: GUI, Nicolae, R-300446 Timisoara (RO)
(74) Vertreter: BRP Renaud & Partner mbB Rechtsanwälte Patentanwälte Steuerberater
(86) Internationale Anmeldenummer: PCT/EP2012/054635
(87) Internationale Veröffentlichungsnummer: WO 2012/130634

(56) Entgegenhaltungen:
- EP-B1- 1 845 299
- DD-A- 41 778
- US-A- 3 414 299

## Beschreibung

Die vorliegende Erfindung betrifft ein Sperrelement für eine Anschlussvorrichtung zum fluidischen und mechanischen Verbinden von zwei Bauteilen. Die Erfindung betrifft außerdem eine mit einem derartigen Sperrelement ausgestattete Anschlussvorrichtung sowie zugehörige Bauteile.

Aus der EP 1 845 299 B1 ist eine Anschlussvorrichtung bekannt, mit deren Hilfe zwei Bauteile fluidisch und mechanisch miteinander verbunden werden können. Die beiden Bauteile sind hierzu so ausgestaltet, dass sie im Bereich hülsenförmiger Abschnitte koaxial ineinander steckbar sind. Der innere hülsenförmige Abschnitt des einen Bauteils weist eine ringförmige Außennut auf, während der äußere hülsenförmige Abschnitt des anderen Bauteils eine ringförmige Innennut aufweist. Im gesteckten Zustand der Bauteile bilden Innennut und Außennut einen ringförmigen Aufnahmekanal, in den ein Sperrelement durch eine im äußeren hülsenförmigen Abschnitt ausgebildete Einführöffnung einführbar ist. Das so im Aufnahmekanal angeordnete Sperrelement sichert den gesteckten Zustand der beiden Bauteile durch Formschluss. Um die beiden gesteckten Bauteile wieder voneinander lösen zu können, muss das Sperrelement aus dem Aufnahmekanal entfernt werden.

Aus der DD 41778 A ist der Oberbegriff des Anspruchs 1 bekannt.

Die vorliegende Erfindung beschäftigt sich mit dem Problem, für ein Sperrelement der eingangs genannten Art bzw. für eine damit ausgestattete Anschlussvorrichtung bzw. für die zugehörigen Bauteile eine verbesserte Ausführungsform anzugeben, die sich insbesondere dadurch auszeichnet, dass das Entfernen des Sperrelements aus dem Aufnahmekanal vereinfacht ist und als Schwerpunkt, dass die Gefahr, dass sich das Sperrelement von selbst aus dem Aufnahmekanal herausbewegt, reduziert ist.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, das Sperrelement zweigliedrig auszugestalten, derart, dass es einen in den Aufnahmekanal einführbaren Sperrkörper und einen Sicherungskörper aufweist, der bei in den Aufnahmekanal eingeführtem Sperrkörper außen am äußeren hülsenförmigen Abschnitt verbleibt. Durch den außen verbleibenden Sperrkörper lässt sich das Sperrelement einfach handhaben. Insbesondere lässt sich der Sicherungskörper einfach greifen, beispielsweise manuell oder mittels eines entsprechenden Werkzeugs, um den Sperrkörper aus dem Aufnahmekanal herauszuziehen. Somit lässt sich die Handhabung des Sperrelements erheblich vereinfachen. Das Sperrelement umfasst den Sperrkörper und den Sicherungskörper bevorzugt integral, so dass das zweigliedrige Sperrelement ein einteiliges oder einstückiges oder umgebautes oder aus einem Stück hergestelltes Element ist. Grundsätzlich können Sperrkörper und Sicherungskörper auch separate Elemente sein, die zum Sperrelement zusammengebaut sind, so dass das Sperrelement ein gebautes Element ist.

Besonders zweckmäßig ist eine Ausführungsform, bei welcher der Sicherungskörper zumindest einen Rasthaken aufweist, mit dem der Sicherungskörper mit dem äußeren hülsenförmigen Abschnitt verrastet werden kann, wenn der Sperrkörper in den Aufnahmekanal eingeführt ist. Durch die Verrastung kann der eingeführte Zustand gesichert werden, so dass sich das Sperrelement nicht mehr von selbst aus dem Aufnahmekanal herausbewegen kann. Die Gefahr eines unerwünschten Lösens der Verbindung zwischen den beiden Bauteilen kann dadurch reduziert werden.

Im Einzelnen kann der jeweilige Rasthaken im eingeführten Zustand des Sperrkörpers nach innen vom Sicherungskörper abstehen und in eine am äußeren hülsenförmigen Abschnitt ausgebildete Sicherungsöffnung eingesteckt werden. Ferner kann der Rasthaken mit einer am äußeren hülsenförmigen Abschnitt ausgebildeten Rastkontur verrastet werden. Hierdurch wird eine effiziente Sicherung des Sicherungskörpers am äußeren hülsenförmigen Abschnitt realisiert, wenn der Sperrkörper in den Aufnahmekanal eingeführt ist.

Entsprechend einer vorteilhaften Ausführungsform kann der Rasthaken so am Sicherungskörper angeordnet sein, dass er im eingeführten Zustand, also bei in den Aufnahmekanal eingeführtem Sperrkörper in der Umfangsrichtung zwischen einem am Sicherungskörper angeordneten äußeren Ende des Sperrkörpers und einem inneren Ende des Sperrkörpers angeordnet ist. Hierdurch ergibt sich eine raumsparende Unterbringung des Rasthakens und eine kompakte Bauform für die Anschlussvorrichtung.

Zusätzlich oder alternativ kann vorgesehen sein, dass die Sicherungsöffnung zum Aufnahmekanal hin offen ist, also in die Innennut einmündet. Der Rasthaken ragt dementsprechend im eingerasteten Zustand in den Aufnahmekanal hinein. Zweckmäßig kann dann die Rastkontur im Bereich der Innennut angeordnet sein.

Entsprechend einer anderen vorteilhaften Ausführungsform kann der Rasthaken einen vom Sicherungskörper ausgehenden Steg und eine beabstandet zum Sicherungskörper vom Steg abstehende Rastnase aufweisen. Zweckmäßig steht der Steg im eingeführten Zustand des Sperrelements bezüglich der Radialrichtung nach innen vom Sicherungskörper ab, während die Rastnase vom Steg in der Umfangsrichtung absteht. Durch diese Formgebung kann der Rasthaken bezüglich der Radialrichtung vergleichsweise tief in den äußeren hülsenförmigen Abschnitt eingreifen, wodurch es möglich ist, eine hinreichend stabile Rastkontur vorzusehen.

Zweckmäßig kann die Rastnase in Richtung zum äußeren Ende des Sperrkörpers vom Steg abstehen. Durch diese Bauform lässt sich insbesondere eine selbstsichernde Vorspannung im Sperrelement realisieren.

Gemäß der Erfindung ist die Einführöffnung so orientiert sein, dass im eingeführten Zustand der Sperrkörper im Bereich seines am Sicherungskörper angeordneten äußeren Endes federelastisch nach außen gebogen ist und dadurch in den Sicherungskörper ein Moment einleitet, das den Sicherungskörper im Bereich des Rasthakens von außen gegen den äußeren hülsenförmigen Abschnitt antreibt. Durch diese Vorspannung kann der verrastete Zustand mit erhöhter Sicherheit aufrechterhalten bleiben.

Besonders zweckmäßig können nun das zuvor genannte Moment und der Rasthaken so aufeinander abgestimmt sein, dass das Moment den Rasthaken in dessen Verrastposition vorspannt. Ein selbsttätiges Lösen der Verrastung kann damit weitgehend ausgeschlossen werden.

Die Rastkontur kann beispielsweise an einem Riegel ausgebildet sein, der am äußeren hülsenförmigen Abschnitt ausgebildet ist und dort die Einführöffnung von der Sicherungsöffnung trennt. Der Riegel kann dabei bezüglich der Radialrichtung in die Innennut hineinragen. Durch diese Maßnahmen ergibt sich eine besonders kompakte Anordnung. Insbesondere können der Sperrkörper und der Rasthaken in einer Ebene liegen, in welcher sich die Nuten ringförmig erstrecken. Diese kompakte Bauweise kann auch dadurch unterstützt werden, dass der Aufnahmekanal bis zur Rastkontur unterbrechungsfrei verläuft, so dass insbesondere kein Umfangsanschlag für das vom Sicherungskörper entfernte innere Ende des Sperrkörpers vorgesehen ist.

Gemäß einer anderen Ausführungsform kann der Rasthaken im eingeführten Zustand radial in eine Vertiefung eingreifen, die im Bereich der Außennut am inneren hülsenförmigen Abschnitt ausgebildet ist, wobei insbesondere vorgesehen sein kann, dass diese Vertiefung bezüglich der Radialrichtung zur Sicherungsöffnung fluchtet. Somit kann der Rasthaken bezüglich der Radialrichtung vergleichsweise tief eingreifen, wodurch eine stabile Verrastung realisierbar ist.

Besonders vorteilhaft ist eine Ausführungsform, bei welcher am Sicherungskörper zumindest ein Werkzeugeingriff ausgebildet ist. Auf diese Weise kann am Sicherungskörper ein entsprechendes Werkzeug angesetzt werden, mit dem der Sicherungskörper mit seinem Rasthaken relativ zum äußeren hülsenförmigen Abschnitt in der Umfangsrichtung soweit bewegt werden kann, bis der Rasthaken von der Rastkontur frei kommt und aus der Sicherungsöffnung herausgezogen werden kann. Anschließend lässt sich durch Angreifen am Sicherungskörper der Sperrkörper aus der Aufnahmenut herausziehen.

Die vorliegende Erfindung betrifft außerdem eine Anschlussvorrichtung zum axialen Stecken und Fixieren von zwei hülsenförmigen Abschnitten, wobei die Axialfixierung mit Hilfe eines Sperrelements der vorbeschriebenen Art erfolgt, indem das Sperrelement in einen Aufnahmekanal eingeführt wird, der im gesteckten Zustand durch eine ringförmige Außennut am inneren hülsenförmigen Abschnitt und eine dazu radial gegenüberliegende ringförmige Innennut am äußeren hülsenförmigen Abschnitt gebildet ist.

Die vorliegende Erfindung betrifft außerdem ein Bauteil, das einen solchen äußeren hülsenförmigen Abschnitt mit ringförmiger Innennut aufweist, sowie ein Bauteil, das einen solchen inneren hülsenförmigen Abschnitt mit einer solchen ringförmigen Außennut aufweist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1: einen Längsschnitt durch eine Anschlussvorrichtung,
- Fig. 2: eine isometrische, auseinandergezogene Darstellung der Anschlussvorrichtung,
- Fig. 3: ein Querschnitt der Anschlussvorrichtung im Bereich eines Sperrelements,
- Fig. 4: eine vergrößerte Detailansicht des Querschnitts im Bereich eines Sicherungskörpers.

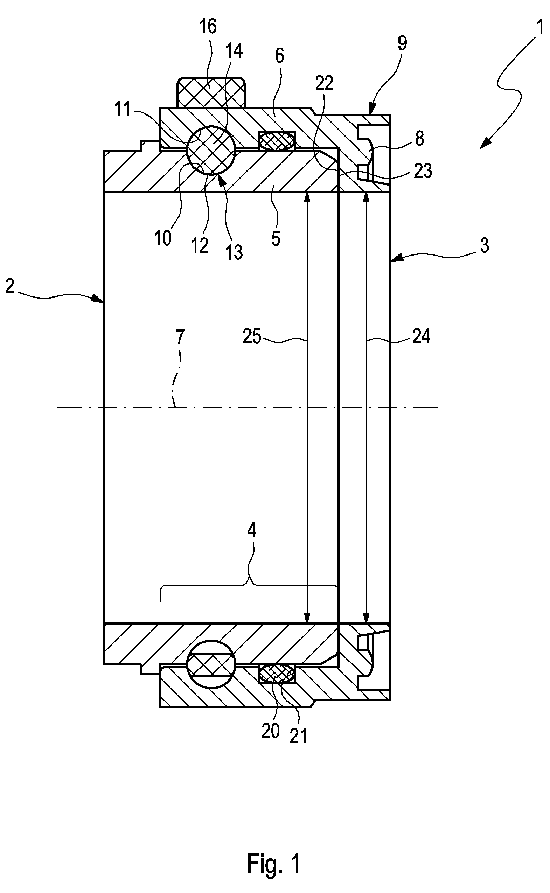

Entsprechend den Figuren 1-4 umfasst eine Anschlussvorrichtung 1, mit deren Hilfe ein erstes Bauteil 2 und ein zweites Bauteil 3 fluidisch und mechanisch miteinander verbunden werden können, einen Bereich 4, in dem zwei hülsenförmige Abschnitte, nämlich ein innerer hülsenförmiger Abschnitt 5 und ein äußerer hülsenförmiger Abschnitt 6 bezüglich einer Längsmittelachse 7 koaxial ineinander steckbar sind. Die beiden hülsenförmigen Abschnitte 5, 6 bilden Bestandteile der Anschlussvorrichtung 1, sind jedoch an den beiden Bauteilen 2, 3 ausgebildet. So ist der innere hülsenförmige Abschnitt 5 ein Bestandteil des ersten Bauteils 2, während der äußere hülsenförmige Abschnitt 6 ein Bestandteil des zweiten Bauteils 3 ist. Bei den Bauteilen 2, 3 kann es sich um Schläuche oder Kanäle oder um Gehäuseabschnitte handeln. Der jeweilige hülsenförmigen Abschnitt 5, 6 kann dann einen axialen Endbereich des jeweiligen Bauteils 2, 3 oder einen Anschlussstutzen des jeweiligen Bauteils 2, 3 bilden. Der jeweilige hülsenförmige Abschnitt 5, 6 kann am jeweiligen Bauteil 2, 3 integral ausgeformt sein, also damit einstückig hergestellt sein, oder separat vom jeweiligen Bauteil 2, 3 hergestellt sein und daran angebaut sein. In Figur 1 ist beispielsweise eine Reibschweißkontur 8 angedeutet, mit der es möglich ist, einen den äußeren hülsenförmigen Abschnitt 6 tragenden Hülsenkörper 9 am jeweiligen zweiten Bauteil 3 zu befestigen.

Der innere hülsenförmige Abschnitt 5 besitzt gemäß den Figuren 1-4 eine ringförmige Außennut 10, die sich konzentrisch zur Längsmittelachse 7 erstreckt. Der äußere hülsenförmige Abschnitt 6 besitzt eine ringförmige Innennut 11, die sich ebenfalls konzentrisch zur Längsmittelachse 7 erstreckt, die radial fluchtend der Außennut 10 gegenüberliegt, so dass beide Nuten 10, 11 in einer gemeinsamen Axialebene liegen. Gemeinsam bilden Innennut 11 und Außennut 10 im gesteckten Zustand der Bauteile 2, 3, also wenn der innere hülsenförmige Abschnitt 5 gemäß Figur 1 vollständig bzw. ordnungsgemäß in den äußeren hülsenförmigen Abschnitt 6 eingesteckt ist, einen ringförmigen Aufnahmekanal 12. Um den gesteckten Zustand der Bauteile 2, 3 axial sichern zu können, ist in den Aufnahmekanal 12 ein Sperrelement 13 eingeführt. Das Sperrelement 13 besitzt einen Sperrkörper 14, der den Aufnahmekanal 12 weitgehend ausfüllt, also sowohl in die Innennut 11 als auch in die Außennut 10 eingreift.

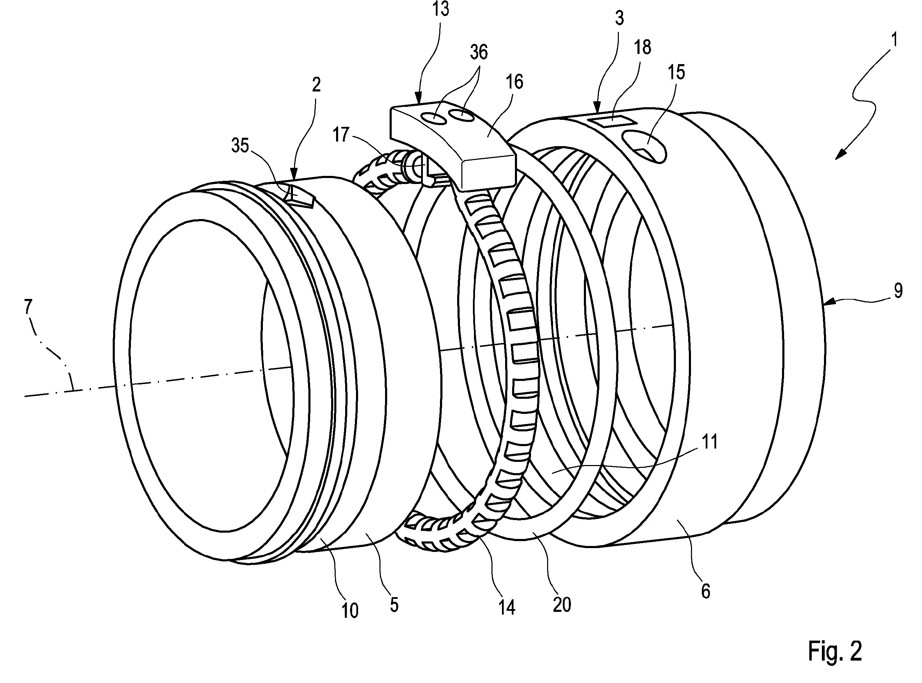

Um das Sperrelement 13 montieren zu können, ist am äußeren hülsenförmigen Abschnitt 6 eine in den Figuren 2-4 erkennbare Einführöffnung 15 ausgebildet. Durch diese Einführöffnung 15 ist das Sperrelement 13 mit seinem Sperrkörper 14 in den Aufnahmekanal 12 einführbar. Dementsprechend ist die Einführöffnung 15 so positioniert, dass sie zur Innennut 11 und somit zum Aufnahmekanal 12 hin offen ist.

Das Sperrelement 13 weist außerdem einen Sicherungskörper 16 auf, von dem der Sperrkörper 14 ausgeht. Während der Sperrkörper 14 beim Montieren des Sperrelements 13 zwischen den hülsenförmigen Abschnitten 5, 6 im Aufnahmekanal 12 untergebracht wird, verbleibt der Sicherungskörper 16 außen am äußeren hülsenförmigen Abschnitt 6. Entsprechend den Figuren 2-4 weist der Sicherungskörper 16 einen Rasthaken 17 auf. Im eingeführten Zustand, also bei in den Aufnahmekanal 12 eingeführtem Sperrkörper 14 steht der Rasthaken 17 vom Sicherungskörper 16 nach innen ab und greift durch eine Sicherungsöffnung 18 in den Aufnahmekanal 12 hinein und verrastet dort mit einer Rastkontur 19, die zu diesem Zweck am äußeren hülsenförmigen Abschnitt 6 ausgebildet ist. Hierdurch ist das Sperrelement 13 im eingeführten Zustand am äußeren hülsenförmigen Abschnitt 6 gesichert.

Das Sperrelement 13 ist vorzugsweise mit seinem Sperrkörper 14 und seinem Sicherungskörper 16 einschließlich Rasthaken 17 integral aus einem Stück hergestellt.

Wie den Figuren 1 und 2 zu entnehmen ist, kann die Anschlussvorrichtung 1 außerdem mit wenigstens einem Dichtring 20 ausgestattet sein, um die beiden ineinander gesteckten hülsenförmigen Abschnitte 5, 6 gegeneinander abzudichten. Der Dichtring 20 wirkt dabei radial. Im Beispiel ist zum axialen Fixieren des Dichtrings 20 am äußeren hülsenförmigen Abschnitt 6 eine innenliegende, ringförmige Aufnahmenut 21 ausgebildet, in welche der Dichtring 20 eingesetzt ist. Im Beispiel ist am äußeren hülsenförmigen Abschnitt 6 bzw. am Hülsenkörper 9 eine radial nach innen vorstehende Ringstufe 22 ausgebildet, an welcher eine axiale Stirnseite 23 des inneren hülsenförmigen Abschnitts 5 axial zur Anlage kommt, wenn die beiden hülsenförmigen Abschnitte 5, 6 vollständig ineinander gesteckt sind. Zweckmäßig ist diese Ringstufe 22 dabei so dimensioniert, dass der Hülsenkörper 9 im Anschluss an den inneren hülsenförmigen Abschnitt 5 einen Innenquerschnitt 24 aufweist, der geometrisch gleich ist wie ein Innenquerschnitt 25 des inneren hülsenförmigen Abschnitts 5. Somit grenzen nicht näher bezeichnete Innenwände der beiden hülsenförmigen Abschnitte 5, 6 bzw. der zugehörigen Bauteile 2, 3 im strömungsführenden Bereich bündig aneinander.

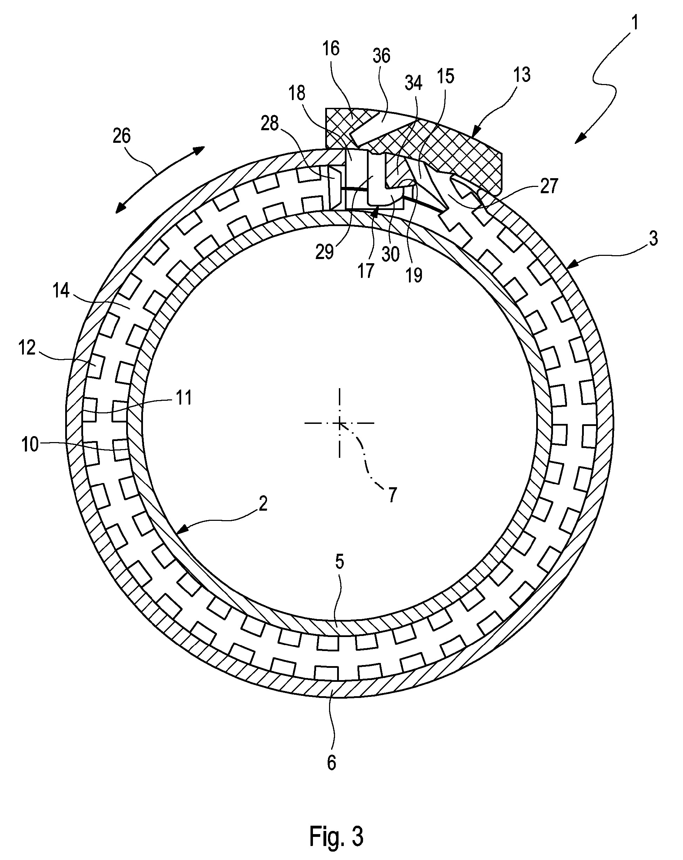

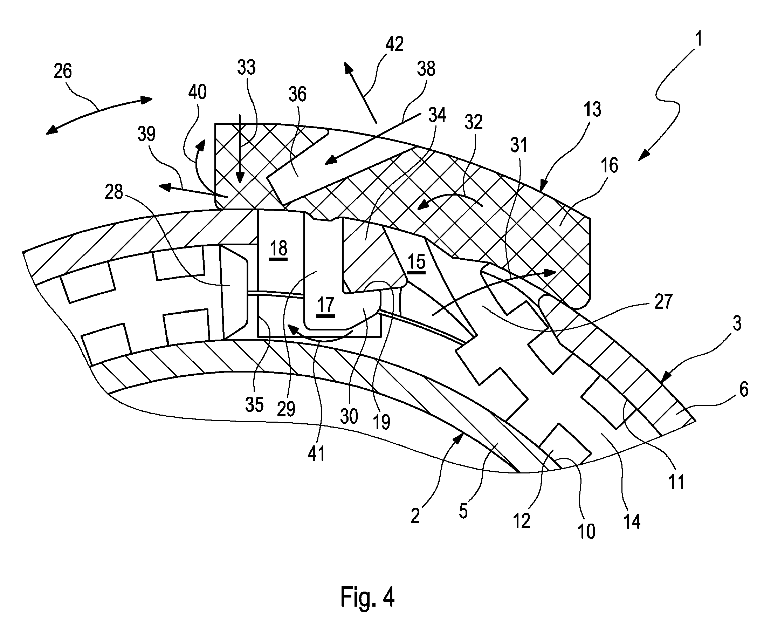

Wie sich insbesondere den Figuren 3 und 4 entnehmen lässt, ist der Rasthaken 17 am Sicherungskörper 16 so angeordnet, dass er sich in der Umfangsrichtung, die in den Figuren 3 und 4 durch einen Doppelpfeil 26 angedeutet ist, zwischen einem am Sicherungskörper 16 angeordneten äußeren Ende 27 des Sperrkörpers 14 und einem vom Sicherungskörper 16 entfernten inneren Ende 28 des Sperrkörpers 14 befindet. Somit liegen Rasthaken 17 und Sperrkörper 14 in einer gemeinsamen Axialebene.

Der Rasthaken 17 weist einen Steg 29 auf, der an einer Innenseite vom Sicherungskörper 16 absteht. Ferner weist der Rasthaken 17 eine Rastnase 30 auf, die in der Umfangsrichtung vom Steg 29 absteht, und zwar an einem vom Sicherungskörper 16 entfernten Ende. Im Beispiel steht die Rastnase 30 in der Umfangsrichtung 26 in Richtung zum äußeren Ende 27 des Sperrkörpers 14 vom Steg 29 ab.

Die Einführöffnung 15 besitzt hinsichtlich ihrer Orientierung eine spezielle Neigung gegenüber dem Aufnahmekanal 12, die zwischen einer tangentialen Ausrichtung und einer radialen Ausrichtung liegt, jedoch insbesondere so gewählt ist, dass der Sperrkörper 14 im Bereich seines äußeren Endes 27 federelastisch nach außen gebogen ist. Die Richtung dieser elastischen Verbiegung des Sperrkörpers 14 im Bereich des äußeren Endes 27 ist in Figur 4 durch einen Pfeil 31 angedeutet. Durch diese Verbiegung 31 entstehen im Sperrkörper 14 Rückstellkräfte, die ein in Figur 4 durch einen Pfeil angedeutetes Moment 32 erzeugen, das den Sicherungskörper 16 im Bereich des Rasthakens 17 von außen gegen den äußeren hülsenförmigen Abschnitt 6 antreibt. Hierdurch wird der Sicherungskörper 16 entsprechend einem Pfeil 33 radial nach innen gegen den äußeren hülsenförmigen Abschnitt 6 zur Anlage vorgespannt. Gleichzeitig bewirkt das Moment 32 eine Vorspannung des Rasthakens 17 in dessen mit der Rastkontur 19 verrasteten Verrastposition. Im Beispiel der Figur 4 muss der Rasthaken 17 die Rastkontur 19 entgegen dem Uhrzeigersinn hintergreifen. Das Moment 32 ist daher ebenfalls im Gegenuhrzeigersinn orientiert.

Gemäß den Figuren 3 und 4 ist die Rastkontur 19 an einem Riegel 34 ausgebildet, der seinerseits integral am äußeren hülsenförmigen Abschnitt 6 ausgeformt ist. Ferner ist der Riegel 34 am äußeren hülsenförmigen Abschnitt 6 so positioniert, dass er bezüglich der Umfangsrichtung 26 zwischen der Einführöffnung 15 und der Sicherungsöffnung 18 angeordnet ist und diese voneinander trennt. Um das Einrasten des Rasthakens 17 am Riegel 34 zu vereinfachen, kann außerdem am inneren hülsenförmigen Abschnitt 5 im Bereich der Außennut 10 eine Vertiefung 35 ausgebildet sein, die bezüglich der Radialrichtung fluchtend zur Sicherungsöffnung 18 orientiert ist. Auf diese Weise kann der Rasthaken 17 in diese Vertiefung 35 radial eingreifen.

Bei der hier gezeigten, speziellen Ausführungsform ist der Sicherungskörper 16 außerdem mit mindestens einem Werkzeugeingriff 36 ausgestattet, um eine Manipulation des Sperrelements 13 mit Hilfe eines Werkzeugs 37 zu vereinfachen. Im Beispiel sind zwei Werkzeugeingriffe 36 vorgesehen, die durch zylindrische oder konische Einstecköffnungen gebildet sind. Die Werkzeugeingriffe 36 sind etwa 45° gegenüber der Radialrichtung geneigt. Zum Entfernen des Sperrelements 13 aus dem Aufnahmekanal 12 kann nun das jeweilige Werkzeug 37 mit dem jeweiligen Werkzeugeingriff 36 entsprechend einem Pfeil 38 in Eingriff gebracht werden. Anschließend kann der Sicherungskörper 16 in der Umfangsrichtung 26 gemäß einem Pfeil 39 verschoben werden und gemäß einem Pfeil 40 gekippt werden, und zwar entgegen dem Moment 32, also hier im Uhrzeigersinn. Hierdurch verschwenkt der Rasthaken 17 entsprechend einem Pfeil 41 ebenfalls entgegen dem Moment 32, also hier im Uhrzeigersinn, wodurch der Rasthaken 17 von der Rastkontur 19 freikommt. Anschließend kann durch Angreifen am Sicherungskörper 16 manuell oder mit dem Werkzeug 37 gemäß einem Pfeil 42 der Sperrkörper 14 aus dem Aufnahmekanal 12 herausgezogen werden.

## Patentansprüche

1. Anschlussvorrichtung (1) umfassend zwei Bauteile und ein Sperrelement zum fluidischen und mechanischen Verbinden der zwei Bauteile (2, 3), die im Bereich (4) hülsenförmiger Abschnitte (5, 6) koaxial ineinander steckbar sind, wobei der innere hülsenförmige Abschnitt (5) des einen Bauteils (2) eine ringförmige Außennut (10) aufweist, während der äußere hülsenförmige Abschnitt (6) des anderen Bauteils (3) eine ringförmige Innennut (11) aufweist, wobei Innennut (11) und Außennut (10) im gesteckten Zustand der Bauteile (2, 3) einen ringförmigen Aufnahmekanal (12) bilden, in den das Sperrelement (13) durch eine im äußeren hülsenförmigen Abschnitt (6) ausgebildete Einführöffnung (15) einführbar ist, wobei das im Aufnahmekanal (12) angeordnete Sperrelement (13) den gesteckten Zustand der Bauteile (2, 3) sichert,
- wobei das Sperrelement (13) einen in den Aufnahmekanal (12) einführbaren Sperrkörper (14) und einen Sicherungskörper (16) aufweist, von dem der Sperrkörper (14) ausgeht und der im eingeführten Zustand außen am äußeren hülsenförmigen Abschnitt (6) verbleibt,
- wobei der Sicherungskörper (16) zumindest einen Rasthaken (17) aufweist, der im eingeführten Zustand nach innen vom Sicherungskörper (16) absteht und mit einer am äußeren hülsenförmigen Abschnitt (6) ausgebildeten Rastkontur (19) verrastbar ist,
- wobei die Rastkontur (19) an einem Riegel (34) ausgebildet ist, der am äußeren hülsenförmigen Abschnitt (6) ausgebildet ist und dort in der Umfangsrichtung zwischen der Einführöffnung (15) und einer am äußeren hülsenförmigen Abschnitt (6) ausgebildeten Sicherungsöffnung (18) angeordnet ist, in die der Rasthaken einsteckbar ist,
**dadurch gekennzeichnet,**
**dass** die Einführöffnung (15) so orientiert ist, dass im eingeführten Zustand der Sperrkörper (14) im Bereich seines am Sicherungskörper (16) angeordneten äußeren Endes (27) federelastisch nach außen gebogen ist und dadurch in den Sicherungskörper (16) ein Moment (32) einleitet, das den Sicherungskörper (16) im Bereich des Rasthakens (17) von außen gegen den äußeren hülsenförmigen Abschnitt (6) antreibt.

2. Anschlussvorrichtung nach Anspruch 1,
**dadurch gekennzeichnet,**
**dass** der Rasthaken (17) so am Sicherungskörper (16) angeordnet ist, dass er im eingeführten Zustand in der Umfangsrichtung (26) zwischen einem am Sicherungskörper (16) angeordneten äußeren Ende (27) des Sperrkörpers (14) und einem inneren Ende (28) des Sperrkörpers (14) angeordnet ist.

3. Anschlussvorrichtung nach Anspruch 1 oder 2,
**dadurch gekennzeichnet,**
**dass** der Rasthaken (17) einen vom Sicherungskörper (16) ausgehenden Steg (29) und eine beabstandet zum Sicherungskörper (16) vom Steg (29) abstehende Rastnase (30) aufweist, wobei im eingeführten Zustand der Steg (29) bezüglich der Radialrichtung nach innen vom Sicherungskörper (16) absteht und die Rastnase (30) in der Umfangsrichtung (26) vom Steg (29) absteht.

4. Anschlussvorrichtung nach Anspruch 3,
**dadurch gekennzeichnet,**
**dass** die Rastnase (30) in Umfangsrichtung (26) zum äußeren Ende (27) des Sperrkörpers (14) vom Steg (29) absteht.

5. Anschlussvorrichtung nach einem der Ansprüche 1 bis 4,
**dadurch gekennzeichnet,**
**dass** die Sicherungsöffnung (18) radial durchgehend ausgestaltet und zur Innennut (11) offen ist.

6. Anschlussvorrichtung nach einem der Ansprüche 1 bis 5,
**dadurch gekennzeichnet,**
**dass** das Moment (32) und der Rasthaken (17) so aufeinander abgestimmt sind, dass das Moment (32) den Rasthaken (17) in dessen Verrastposition vorspannt.

7. Anschlussvorrichtung nach einem der Ansprüche 1 bis 6,
**dadurch gekennzeichnet,**
**dass** der Rasthaken (17) im eingeführten Zustand radial in eine Vertiefung (35) eingreift, die im Bereich der Außennut (10) am inneren hülsenförmigen Abschnitt (5) ausgebildet ist.

8. Verwendung eines Sperrelements (13), das einen Sperrkörper (14) und einen Sicherungskörper (16) aufweist, von dem der Sperrkörper (14) ausgeht und der zumindest einen Rasthaken (17) aufweist, in einer Anschlussvorrichtung (1) nach einem der Ansprüche 1 bis 7, so dass der Rasthaken (17) im eingeführten Zustand mit der am Riegel (34) ausgebildeten Rastkontur (19) verrastet ist.

## Claims

1. Connecting device (1) comprised of two structural components and a locking element for the fluid and mechanical connection of the two structural components (2,3), which can be inserted into one another coaxially in the region (4) of the sleeve-shaped sections (5,6), wherein the inner sleeve-shaped section (5) of the one structural component (2) has a ring-shaped external groove (10), whilst the outer sleeve-shaped section (6) of the other structural component (3) has a ring-shaped internal groove (11), wherein the internal groove (11) and the external groove (10) in an inserted condition of the structural components (2,3) form a ring-shaped acceptance channel (12), into which the locking element (13) can be inserted through an inlet opening (15) formed in the outer sleeve-shaped section (6), wherein the locking element (13) arranged in the acceptance channel (12) secures the inserted condition of the structural components (2,3),
- wherein the locking element (13) has a locking body (14) which can be inserted into the acceptance channel (12) and a securing body (16), from which the locking body (14) protrudes and which in an inserted condition remains external on the outer sleeve-shaped section (6),
- wherein the security body (16) has at least one detent arm (17), which in the inserted condition protrudes inwards from the securing element (16) and can be locked in place with a locking contour (19) formed on the outer sleeve-shaped section (6),
- wherein the locking contour (19) is formed on a bar (34) formed on the outer sleeve-shaped section (6) and is arranged there in the peripheral direction between the inlet opening (15) and a security opening (18) formed on the outer sleeve-shaped section (6), into which the detent arm can be inserted, **characterised in that** the inlet opening (15) is arranged in such a way that in the inserted condition the locking body (14) is bent outwards flexibly elastically in the region of its end arranged outermost (27) on the security body (16), and in this way introduces a moment (32) into the security body (16) which pushes the security body (16) against the outer sleeve-shaped section (6) from the outside in the region of the detent arm (17).

2. Connecting device according to Claim 1, **characterised in that** the detent arm (17) is arranged on the security body (16) in such a way, that in the inserted state it is arranged in a peripheral direction (26) between the end (27) of the locking body (14) arranged outermost on the security body (16) and an inner end (28) of the locking body (14).

3. Connecting device according to Claim 1 or 2, **characterised in that** the detent arm (17) has a web (29) emanating from the security body (16) and a detent lug (30) protruding from the web (29), set at a distance from the security body (16), wherein the web (29) protrudes inwards from the security body (16) in the inserted condition with regard to the radial direction and the detent lug (30) protrudes in a peripheral direction (26) from the web (29).

4. Connecting device according to Claim 3, **characterised in that** the detent lug (30) protrudes from the web (29) in a peripheral direction (26) to the outer end (27) of the locking body (14).

5. Connecting device according to one of the Claims 1 to 4, **characterised in that** the security opening (18) is formed radially continuous and is open towards the inner groove (11).

6. Connecting device according to one of the Claims 1 to 5, **characterized in that** the moment (32) and the detent arm (17) are coordinated with one another in such a way that the moment (32) pre-stresses the detent arm (17) in its locked position.

7. Connecting device according to one of the Claims 1 to 6, **characterised in that** the detent arm (17) in the installed condition reaches radially into a depression (35) formed in the region of the external groove (10) on the inner sleeve-shaped section (5).

8. Use of a locking element (13) which has a locking body (14) and a security body (16), from which the locking body (14) protrudes and which has at least one detent arm (17), in a connecting device (1) according to one of the claims 1 to 7 so that the detent arm (17) in the installed condition is locked in place with the detent contour (19) formed on the bar (34).

## Revendications

1. Dispositif de raccordement (1) comprenant deux composants et un élément de blocage pour le raccordement fluidique et mécanique des deux composants (2,3), qui peuvent être enfichés coaxialement l'un dans l'autre dans la zone (4) de sections en forme de douille (5, 6), dans lequel la section en forme de douille interne (5) du premier composant (2) présente une rainure annulaire externe (10), tandis que la section en forme de douille externe (6) de l'autre composant (3) présente une rainure annulaire interne (11), dans lequel la rainure interne (11) et la rainure externe (10) forment à l'état enfiché des composants (2, 3) un canal récepteur annulaire (12) dans lequel l'élément de blocage (13) peut être inséré à travers une ouverture d'insertion (15) formée dans la section en forme de douille externe (6), dans lequel l'élément de blocage (13) aménagé dans le canal récepteur (12) garantit l'état enfiché des composants (2, 3),
- dans lequel l'élément de blocage (14) présente un corps de blocage (14) enfichable dans le canal récepteur (12) et un corps de sécurité (16) dont le corps de blocage (14) affleure et qui reste à l'état enfiché à l'extérieur sur la section en forme de douille externe (6),
- dans lequel le corps de sécurité (16) présente au moins un crochet d'encliquetage (17) qui est éloigné à l'état enfiché vers l'intérieur du corps de sécurité (16) et qui peut être verrouillé sur un contour d'encliquetage (19) formé sur la section en forme de douille externe (6),
- dans lequel le contour d'encliquetage (19) est formé sur un verrou (34) qui est formé sur la section en forme de douille externe (6) et y est aménagé dans la direction périphérique entre l'ouverture d'insertion (15) et une ouverture de sécurité (18) formée sur la section enforme de douille externe (6), dans laquelle le crochet d'encliquetage peut s'enficher,
**caractérisé en ce que** :
l'ouverture d'insertion (15) est orientée de sorte qu'à l'état enfiché, le corps de blocage (14) soit recourbé vers l'extérieur de manière élastique dans la zone de son extrémité externe (27) agencée sur le corps de sécurité (16) et induise ainsi dans le corps de sécurité (16) un couple (32) qui entraîne le corps de sécurité (16) dans la zone du crochet d'encliquetage (17) de l'extérieur contre la section en forme de douille externe (6).

2. Dispositif de raccordement selon la revendication 1,
**caractérisé en ce que** :
le crochet d'encliquetage (17) est agencé sur le corps de sécurité (16) de sorte qu'il soit disposé à l'état enfiché dans la direction périphérique (26) entre une extrémité externe (27) du corps de blocage (14) située sur le corps de sécurité (16) et une extrémité interne (28) du corps de blocage (14).

3. Dispositif de raccordement selon la revendication 1 ou 2,
**caractérisé en ce que** :
le crochet d'encliquetage (17) présente une barrette (29) sortant du corps de sécurité (16) et un tenon d'encliquetage (30) éloigné de la barrette (29) à distance du corps de sécurité (16), dans lequel, à l'état enfiché, la barrette (29) est éloignée du corps de sécurité (16) dans la direction radiale vers l'intérieur et le tenon d'encliquetage (30) est distant de la barrette (29) dans la direction périphérique (26).

4. Dispositif de raccordement selon la revendication 3,
**caractérisé en ce que** :
le tenon d'encliquetage (30) est éloigné de la barrette (29) dans la direction périphérique (26) vers l'autre extrémité (27) du corps de blocage (14).

5. Dispositif de raccordement selon l'une quelconque des revendications 1 à 4,
**caractérisé en ce que** :
l'ouverture de sécurité (18) est conformée radialement de manière ininterrompue et est ouverte vers la rainure interne (11).

6. Dispositif de raccordement selon l'une quelconque des revendications 1 à 5,
**caractérisé en ce que** :
le couple (32) et le crochet d'encliquetage (17) sont ajustés l'un à l'autre de sorte que le couple (32) soumette à une précontrainte le crochet d'encliquetage (17) dans sa position de verrouillage.

7. Dispositif de raccordement selon l'une quelconque des revendications 1 à 6,
**caractérisé en ce que** :
le crochet d'encliquetage (17) s'engage à l'état enfiché radialement dans un renfoncement (35) qui est formé dans la zone de la rainure externe (10) sur la section en forme de douille interne (5).

8. Utilisation d'un élément de blocage (13) qui présente un corps de blocage (14) et un corps de sécurité (16), dont le corps de blocage (14) dépasse et qui présente au moins un crochet d'encliquetage (17), dans un dispositif de raccordement (1) selon l'une quelconque des revendications 1 à 7 de sorte que le crochet d'encliquetage (17) soit verrouillé à l'état enfiché sur le contour d'encliquetage (19) formé sur le verrou (34).
